# EUROPEAN PATENT SPECIFICATION

(11) **EP 2 574 783 B1**
(45) Date of publication and mention of the grant of the patent: **07.02.2024**
(21) Application number: 12186187.6
(22) Date of filing: 26.09.2012
(51) Int. Cl.: F03G 3/00

(54) **UNIVERSAL SYSTEM FOR TRANSFORMING ROTATIONAL MOTION INTO TRANSLATIONAL MOTION**
UNIVERSALSYSTEM ZUM UMWANDELN DER ROTATIONSBEWEGUNG IN EINE ÜBERSETZUNGSBEWEGUNG
SYSTÈME UNIVERSEL POUR TRANSFORMER UN MOUVEMENT ROTATIF EN MOUVEMENT DE TRANSLATION

(30) Priority: 30.09.2011 ES 201131584
(43) Date of publication of application: 03.04.2013
(73) Proprietor: Sanchez Ruiz, Alfredo, 08033 Barcelona (ES)
(72) Inventor: Sanchez Ruiz, Alfredo, 08033 Barcelona (ES)
(74) Representative: Ponti & Partners, S.L.P

(56) References cited:
- WO-A1-2006/106375
- ES-A1- 432 873
- US-A- 4 712 439
- US-A1- 2007 034 042

## Description

The present invention relates to a mobile device including a system for transforming rotational motion into translational motion.

### Background of the invention

Patent number ES432873A, held by the same applicant filing the present patent application, discloses a known system for transforming rotational motion into translational motion. In this case, the system comprises a mass subject to a gravitational force eccentrically disposed with respect to a rotary shaft, which is subject to rotational motion thereabout in such a manner as to generate a first centrifugal force, said rotary shaft being simultaneously subjected to rotation around a central shaft to generate a second centrifugal force that passes therethrough. Both rotations are synchronised so that the rotary force, resulting from the combination of the two centrifugal forces that act upon the mass, has a maximum inertia value in the same direction when it coincides at two opposite points of a diametrical line with respect to the second rotary shaft, which passes through the plane of rotation, generating an uncompensated inertia force along said line that tends to move the system thereabout.

The system comprises at least one rotor that rotates around a central shaft associated with a power plant to transmit the rotational motion thereto, each of the rotors having at least one element that rotates around the first shaft and has an eccentric mass, and means for transmitting rotational motion synchronised with the rotation of the rotor to said element. Preferably, the rotary elements are gear wheels having eccentric masses that engage with a complementary wheel disposed in coaxial relation with respect to the central shaft, wherein the transmission ratio between the two gear wheels is chosen in such a manner that the first wheels move cycloidally over the second wheel and the eccentric masses describe a cardioide cycloidal path, the vertices of which are disposed along the diametrical line corresponding to the direction of the system's translational motion.

According to an embodiment described in the patent, the system comprises at least one pair of coaxial rotors wherein each of the rotors of the pair is associated with the power plant for actuating rotation thereof in opposite directions and the two rotors of the pair are synchronised in such a manner that their eccentric masses are in phase with each other. To this end, one of the rotors of each pair is fixed to the central shaft, joined to the power plant, and the other rotor is mounted so as to rotate freely around said central shaft and is connected to the first rotor by means of a pinion drive.

In this case, the two rotors are disposed symmetrically on either side of a central plane perpendicular to the rotary shaft. This has the drawback that, during rotation of the masses, an unwanted sideways rattling movement is produced in the direction of translation. Additionally, this system needs continuous power to move the masses, with the ensuing power consumption.

### Description of the invention

The objective of the mobile device including a system for transforming rotational motion into translational motion of the present invention is to resolve the drawbacks of systems known in the state of the art, providing a structurally simpler mobile device that requires less power for operation thereof.

The mobile device object of the present invention, is of the type as claimed in claim 1.

Therefore, a simpler and more effective mechanism with minimum power consumption is achieved by superimposing the two rotors with the centrally aligned masses subject to a gravitational force, as it allows continuous and synchronised rotational motion of the masses subject to a gravitational force in opposite directions, without producing a sideways rattling movement as in the case of the system known in the state of the art.

The following is a description of the main advantages achieved by the mobile device of the invention:
- Translation of the mobile device with minimum power consumption, as the motion is produced by the sum of centrifugal forces.
- The masses subject to a gravitational force act as a flywheel, accumulating energy during acceleration or releasing energy during deceleration, especially suitable for operation with an electric motor and battery.
- Minimum consumption is required to maintain a certain number of revolutions per minute, as the mechanism can be watertight and function in a vacuum, thereby reducing friction.
- Basically, the mobile device must be braked rather than pushed, as the pulsating centrifugal force is continuous.
- The direction of the mobile device can be regulated 360º, as it only depends on the crossing point of the two masses and the system's centre of gravity.
- The mobile device is completely ecological and sustainable, as it dramatically reduces power consumption, mainly in terms of mobility.
- The mobile device can be a vehicle.

In accordance with an embodiment of the invention, a first rotor of the pair having a larger radius is solidarily connected to a bushing shaft disposed concentrically to the rotary shaft, while the second rotor, having a smaller radius and superimposed within the first rotor, is mounted so as to rotate freely around said rotary shaft and is connected to the first rotor through said transmission and synchronisation means, resulting in the rotation of both rotors in opposite directions and with their respective eccentric masses in phase with each other.

Preferably, the transmission and synchronisation means comprise a gear train having gears coupled therebetween, including a first bevel gear actuated by means of the bushing shaft disposed concentrically with respect to the rotary shaft, engaged in turn with at least two intermediate reverse rotation bevel gears, which are engaged in turn with a fourth bevel gear solidarily connected to the second rotor.

It should be noted that the transmission means can be synchronised electrically, electronically or by means of a computer program.

The mobile device comprises wheels intended for moving the system over a surface in the direction of translation.

The wheels include a conventional anti-rollback ring susceptible of limiting the translation motion in a single direction of travel.

Advantageously, the mobile device comprises means for regulating the direction of translation thereof susceptible of acting upon the angle of rotation of the rotary shaft, thereby modifying the orientation of the rotors and wheels.

Therefore, it is possible to move the crossing point of the masses subject to a gravitational force or the system's centre of gravity, enabling the system to move in a certain direction due to the uncompensated inertia force created.

In accordance with one embodiment, said regulating means comprise a first gear actuated by an electric motor and coupled to a second gear that rotates solidarily with the rotary shaft and, on the other hand, at least three interconnected gears that transmit the angular movement of the rotary shaft to an orientation shaft of the wheels.

Advantageously, the mobile device comprises a watertight casing. This reduces the friction of the system components to a maximum during operation thereof.

Optionally, each rotor of the pair is actuated independently by a power plant, thereby compensating the reaction of the movement of the two masses subject to a gravitational force.

### Brief description of the drawings

In order to facilitate the description of the foregoing, drawings are attached wherein, schematically and only by way of non-limiting example for illustrative purposes, an embodiment of the mobile device including a system for transforming rotational motion into translational motion of the invention is represented, wherein:
Figure 1 shows a schematic, cross-sectional view of the mobile device of the invention; and
Figure 2 shows a cross-sectional view of a wheel of the mobile device of the invention.

### Description of a preferred embodiment

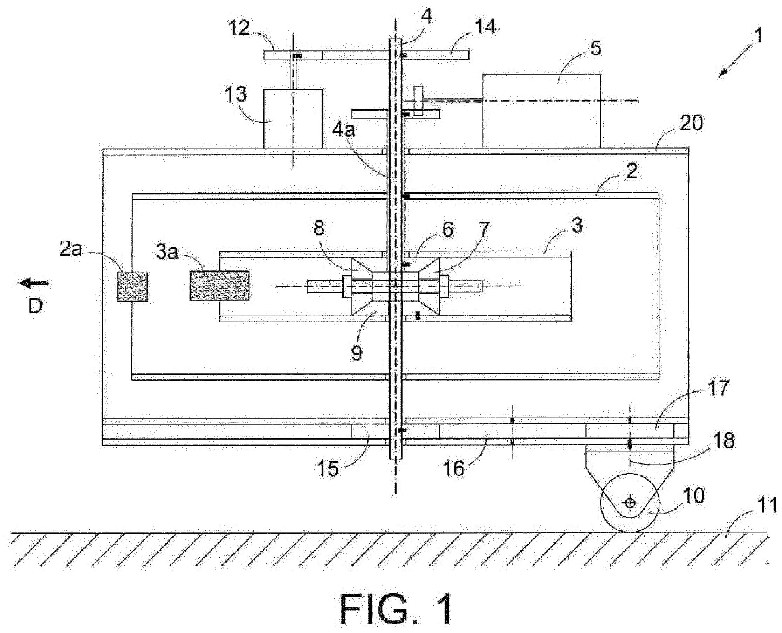

As can be observed in figure 1, the mobile device including the system 1 for transforming rotational motion into translational motion comprises a pair of rotors 2, 3 mounted in coaxial relation with respect to a rotary shaft 4.

Each pair of rotors 2, 3 is associated with at least one power plant 5, in this case an electric motor, for actuating rotation thereof in opposite directions by means of motion transmission and synchronisation means, as explained later. The system 1 can be expanded by increasing the number of pairs of rotors.

Each rotor 2, 3 of the pair includes a mass subject to a gravitational force 2a, 3a eccentrically disposed with respect to said rotary shaft 4. Likewise, the rotation paths of the two rotors 2, 3 overlap inside of each other, with their respective masses subject to a gravitational force 2a, 3a disposed in alignment with each other on a central plane of rotation.

The two masses subject to a gravitational force 2a, 3a are subject to synchronised rotational motion, in opposite directions, describing circles with radii proportional to their respective masses, in such a manner that both masses subject to a gravitational force 2a, 3a are susceptible of generating the corresponding centrifugal forces capable of compensation in a certain direction and of generating an uncompensated inertia force capable of moving the system 1 in a certain direction of translation. The result is a back-and-forth motion of the mobile device in said direction of translation.

During rotation of these two masses 2a, 3a centrifugal forces are created in their plane of rotation, the lateral components of which are compensated and the longitudinal components of which are added together, the maximum sum occurring at the crossing point thereof.

Figure 1 shows the instant in which the two masses subject to a gravitational force 2a, 3a cross each other, generating said uncompensated inertia force that causes translational motion, in this case in a forward direction indicated by arrow D.

In accordance with an embodiment of the invention, a first rotor 2 of the pair having the greatest radii is solidarily connected to a bushing shaft 4a disposed concentrically to the rotary shaft 4, while the second rotor 3, having a smaller radius and superimposed within the first rotor, is disposed so as to rotate freely around said rotary shaft 4 and is connected to the first rotor 2 through transmission and synchronisation means, resulting in the rotation of both rotors 2, 3 in opposite directions and with their respective eccentric masses 2a, 3a in phase with each other.

In this embodiment, the transmission and synchronisation means comprise a gear train having gears coupled therebetween, including a first bevel gear 6 actuated by the bushing shaft 4a disposed concentrically with respect to the rotary shaft 4, engaged in turn with at least two intermediate reverse rotation bevel gears 7, 8 which are in turn engaged to a fourth bevel gear 9 solidarily connected to the second rotor 3.

It should be noted that the transmission means may be synchronised electrically, electronically or by means of a computer program.

Likewise, the mobile device comprises wheels 10 intended for moving the system 1 over a surface 11 in the direction of translation. In general, it includes three groups of one or several wheels 10 for balancing the mobile device on the surface 11. For the sake of clarity, only one group of wheels 10 has been represented in the cross-sectional view shown in figure 1.

The system 1 also comprises means for regulating the direction of translation of the mobile device, susceptible of acting upon the angle of rotation of the rotary shaft 4, thereby modifying the orientation of the rotors 2, 3 and wheels 10.

Therefore, it is possible to move the crossing point of the masses subject to a gravitational force 2a, 3a or the centre of gravity of the system 1, thereby allowing translation of the system 1 in a certain direction as a result of the uncompensated inertia force created.

According to one embodiment, said regulating means comprise a first gear wheel 12 actuated by an electric motor 13 and coupled to a second gear 14 that rotates solidarily with the rotary shaft 4 and, on the other hand, at least three interconnected gear 15, 16 and 17 to transmit the angular movement of the rotary shaft 4 to an orientation shaft 18 of the wheels 10.

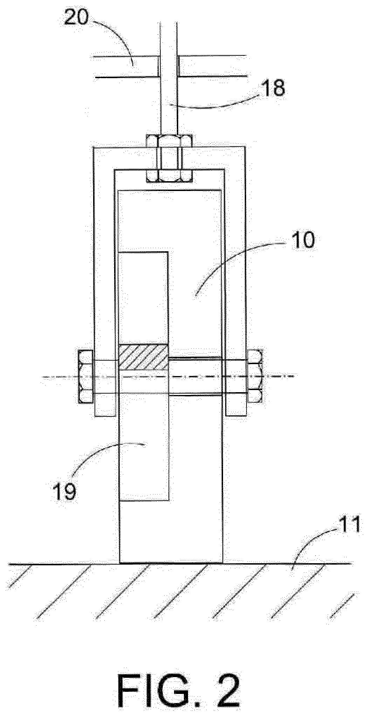

Likewise, as can be observed in figure 2, the wheels 10 include a conventional anti-rollback ring 19, susceptible of limiting the translation motion in a single direction of travel.

The mobile device also comprises a casing 20 for housing thereof in its interior. Said casing 20 is watertight to reduce the friction of the system 1 components to a maximum during operation thereof.

The mobile device of the invention can be applied to the movement of a vehicle, or to the alternative movement of the mechanism of a machine, among other possible applications. A simple prototype tested consists of a vehicle equipped with the system 1 of the invention, capable of moving on rotating wheels, which are self-braking in one direction, without traction.

It should be noted that the mobile device can be materialised in different organic structures to provide and synchronise the rotational motion and to transmit the inertia forces resulting from the system 1 to the mobile being actuated or translated.

## Claims

1. Mobile device including a system (1) for transforming rotational motion of powered rotors into translational motion of the mobile device, comprising;
- at least one pair of rotors (2, 3) mounted in coaxial relation with respect to a rotary shaft (4), each pair of said rotors (2, 3) being associated with at least one power plant (5) for actuating rotation thereof in opposite directions through motion transmission and synchronisation means (6 to 9), and
- each rotor (2, 3) of the pair including a mass subject to a gravitational force (2a, 3a) eccentrically disposed with respect to said rotary shaft (4),
**characterised in that;**
- the rotation paths of the two rotors (2, 3) of the pair overlap inside of each other, with their respective masses subject to a gravitational force (2a, 3a) disposed in alignment with each other on a central plane of rotation, **in that**,
- the two masses subject to a gravitational force (2a, 3a) are arranged to be subjected to synchronised rotational motion, in opposite directions, describing circles with radii proportional to their respective masses, in such a manner that both masses subject to a gravitational force (2a, 3a) are susceptible of generating the corresponding centrifugal forces, said centrifugal forces being capable of compensation in a certain direction and capable of generating a back and forth translational movement of the mobile when both masses cross each other during rotation, and **in that**,
- it comprises rotating wheels (10) arranged for moving the mobile over a surface in a translational direction, said wheels (10) including a conventional anti-rollback ring (19) susceptible of limiting the back and forth translational motion of the mobile device (1) in a single pulsating forward translational motion (D).

2. Mobile device according to claim 1, wherein a first rotor (2) of the pair having the larger radius is solidarily connected to a bushing shaft (4a) disposed concentrically to the rotary shaft (4), while the second rotor (3), having a smaller radius and superimposed within the first rotor, is mounted so as to rotate freely around said rotary shaft (4) and is connected to the first rotor (2) through said transmission and synchronisation means (6 to 9), resulting in the rotation of both rotors (2, 3) in opposite directions and with their respective eccentric masses (2a, 3a) in phase with each other.

3. Mobile device according to claim 2, wherein the transmission and synchronisation means comprise a gear train having gears coupled therebetween, including a first bevel gear (6) actuated by means of the bushing shaft (4a) disposed concentrically with respect to the rotary shaft (4), engaged in turn with at least two intermediate reverse rotation bevel gears (7, 8), which are engaged in turn with a fourth bevel gear (9) solidarily connected to the second rotor (3).

4. Mobile device according to claim 1, comprising means (12 to 17) for regulating the direction of translation of the system (1), susceptible of acting upon the angle of rotation of the rotary shaft (4), thereby modifying the orientation of the rotors (2, 3) and wheels (10).

5. Mobile device according to claim 4, wherein said regulating means comprise a first gear (12) actuated by an electric motor (13) and coupled to a second gear (14) that rotates solidarily with the rotary shaft (4) and, on the other hand, at least three interconnected gears (15, 16, 17) that transmit the angular movement of the rotary shaft (4) to an orientation shaft (18) of the wheels (10).

6. Mobile device according to claim 1, comprising a watertight casing (20).

7. Mobile device according to claim 1, wherein each rotor (2, 3) of the pair is actuated independently by a power plant (5).

## Patentansprüche

1. Mobile Vorrichtung mit einem System (1) zur Umwandlung von Drehbewegung von angetriebenen Rotoren in eine Translationsbewegung der mobilen Vorrichtung, umfassend;
- mindestens ein Paar von Rotoren (2, 3), die in koaxialer Beziehung zu einer Drehwelle (4) montiert sind, wobei jedes Paar der Rotoren (2, 3) mit mindestens einem Antrieb (5) verbunden ist, um deren Drehung in entgegengesetzten Richtungen durch Bewegungsübertragungs- und Synchronisationsmittel (6 bis 9) zu betätigen, und
- wobei jeder Rotor (2, 3) des Paares eine Masse, die einer Schwerkraft (2a, 3a), die exzentrisch mit Bezug zu der genannten Drehwelle (4) angeordnet ist, unterliegt, enthält,
**dadurch gekennzeichnet, dass**
- die Drehbahnen der beiden Rotoren (2, 3) des Paares sich ineinander überlappen, wobei ihre jeweiligen einer Schwerkraft (2a, 3a) unterliegenden Massen in einer zentralen Drehebene fluchtend zueinander angeordnet sind, indem,
- die beiden einer Schwerkraft (2a, 3a) unterliegenden Massen so angeordnet sind, dass sie einer synchronisierten Drehbewegung in entgegengesetzten Richtungen unterliegen, die Kreise mit Radien proportional zu ihren jeweiligen Massen beschreiben, so dass die beiden einer Schwerkraft (2a, 3a) unterworfenen Massen die entsprechenden Zentrifugalkräfte erzeugen können, wobei diese Zentrifugalkräfte in einer bestimmten Richtung kompensiert werden können und
in der Lage sind, eine Vorwärts- und Rückwärts-Translationsbewegung des Mobils zu erzeugen, wenn sich die beiden Massen während Drehung kreuzen, und indem,
- sie drehende Räder (10) umfasst, die angeordnet sind, das Mobil über eine Fläche in einer Translationsrichtung zu bewegen, wobei die Räder (10) einen herkömmlichen Rückrollsicherungsring (19) umfassen, der in der Lage ist, die Vorwärts- und Rückwärts-Translationsbewegung des Mobils (1) in einer einzigen pulsierenden translatorischen Vorwärtsbewegung (D) zu begrenzen.

2. Mobile Vorrichtung nach Anspruch 1, wobei ein erster Rotor (2) des Paares mit dem größeren Radius fest mit einer konzentrisch zu der Drehwelle (4) angeordneten Buchsenwelle (4a) verbunden ist, während der zweite Rotor (3), der einen kleineren Radius aufweist und innerhalb des ersten Rotors überlagert ist, frei um die Drehwelle (4) drehbar montiert ist und mit dem ersten Rotor (2) über die Übertragungs- und Synchronisationsmittel (6 bis 9) verbunden ist, wodurch sich die beiden Rotoren (2, 3) in entgegengesetzten Richtungen und mit ihren jeweiligen exzentrischen Massen (2a, 3a) in Phase zueinander drehen.

3. Mobile Vorrichtung nach Anspruch 2, wobei die Übertragungs- und Synchronisationsmittel einen Getriebezug mit dazwischen gekoppelten Zahnrädern umfassen, einschließlich eines ersten Kegelrads (6), das mittels der konzentrisch zu der Drehwelle (4) angeordneten Buchsenwelle (4a) betätigt wird und seinerseits mit mindestens zwei dazwischenliegenden Kegelrädern (7, 8) mit umgekehrter Drehrichtung in Eingriff steht, die ihrerseits mit einem vierten Kegelrad (9) in Eingriff stehen, das fest mit dem zweiten Rotor (3) verbunden ist.

4. Mobile Vorrichtung nach Anspruch 1, die Mittel (12 bis 17) zur Regelung der Translationsrichtung des Systems (1) umfasst, die auf den Drehwinkel der Drehwelle (4) einwirken können, wodurch die Ausrichtung der Rotoren (2, 3) und der Räder (10) verändert wird.

5. Mobile Vorrichtung nach Anspruch 4, wobei die Regulierungsmittel ein erstes Zahnrad (12) umfassen, das von einem Elektromotor (13) betätigt wird und das mit einem zweiten Zahnrad (14) gekoppelt ist, das sich fest mit der Drehwelle (4) dreht, und andererseits mindestens drei miteinander verbundene Zahnräder (15, 16, 17), die die Winkelbewegung der Drehwelle (4) auf eine Ausrichtungswelle (18) der Räder (10) übertragen.

6. Mobile Vorrichtung nach Anspruch 1, die ein wasserdichtes Gehäuse (20) umfasst.

7. Mobile Vorrichtung nach Anspruch 1, wobei jeder Rotor (2, 3) des Paares von einem Antrieb (5) unabhängig betätigt wird.

## Revendications

1. Dispositif mobile incluant un système (1) pour transformer le mouvement de rotation des rotors motorisés en mouvement de translation de l'appareil mobile, comprenant ;
- au moins une paire de rotors (2, 3) montés en relation coaxiale par rapport à un arbre rotatif (4), chaque paire desdits rotors (2, 3) étant associée à au moins une centrale électrique (5) pour actionner leur rotation dans des directions opposées par l'intermédiaire de moyens de transmission de mouvement et de synchronisation (6 à 9), et
- chaque rotor (2, 3) de la paire incluant une masse soumise à une force gravitationnelle (2a, 3a) excentrée par rapport à l'arbre rotatif (4),
**caractérisé en ce que :**
- les trajectoires de rotation des deux rotors (2, 3) de la paire se chevauchent à l'intérieur l'un de l'autre, leurs masses respectives soumises à une force gravitationnelle (2a, 3a) étant disposées en alignement l'une avec l'autre sur un plan de rotation central, et **en ce que**,
- les deux masses soumises à une force gravitationnelle (2a, 3a) sont agencées pour être soumises à un mouvement de rotation synchronisé, dans des directions opposées, décrivant des cercles de rayons proportionnels à leurs masses respectives, de telle sorte que les deux masses soumises à une force gravitationnelle (2a, 3a) sont susceptibles de générer les forces centrifuges correspondantes, lesdites forces centrifuges étant capables de compensation dans une certaine direction et capables de générer un mouvement de translation d'avant en arrière du mobile lorsque les deux masses se croisent au cours de la rotation, et **en ce que**,
- il comprend des roues rotatives (10) agencées de façon à déplacer le mobile sur une surface dans une direction de translation, lesdites roues (10) incluant un anneau anti-retour conventionnel (19) susceptible de limiter le mouvement de translation d'avant en arrière du dispositif mobile (1) en un seul mouvement de translation d'avant pulsé (D).

2. Dispositif mobile selon la revendication 1, dans lequel un premier rotor (2) de la paire présentant le plus grand rayon est solidairement relié à un arbre à douilles (4a) disposé concentriquement à l'arbre rotatif (4), tandis que le second rotor (3), présentant un rayon plus petit et superposé au premier rotor, est monté de manière à tourner librement autour de l'arbre rotatif (4) et est relié au premier rotor (2) par l'intermédiaire des moyens de transmission et de synchronisation (6 à 9), ce qui entraîne la rotation des deux rotors (2, 3) dans des directions opposées et avec leurs masses excentriques respectives (2a, 3a) en phase l'une avec l'autre.

3. Dispositif mobile selon la revendication 2, dans lequel les moyens de transmission et de synchronisation comprennent un train d'engrenages avec des engrenages couplés entre eux, incluant un premier engrenage conique (6) actionné au moyen de l'arbre à douilles (4a) disposé concentriquement par rapport à l'arbre rotatif (4), mis en prise à son tour avec au moins deux engrenages coniques intermédiaires à rotation inverse (7, 8), qui sont mis en prise à leur tour avec un quatrième engrenage conique (9) solidairement lié au second rotor (3).

4. Dispositif mobile selon la revendication 1, comprenant des moyens (12 à 17) de régulation du sens de translation du système (1), susceptibles d'agir sur l'angle de rotation de l'arbre rotatif (4), modifiant ainsi l'orientation des rotors (2, 3) et des roues (10).

5. Dispositif mobile selon la revendication 4, dans lequel lesdits moyens de régulation comprennent un premier engrenage (12) actionné par un moteur électrique (13) et couplé à un deuxième engrenage (14) qui tourne solidairement avec l'arbre rotatif (4) et, d'autre part, au moins trois engrenages interconnectés (15, 16, 17) qui transmettent le mouvement angulaire de l'arbre rotatif (4) à un arbre d'orientation (18) des roues (10).

6. Dispositif mobile selon la revendication 1, comprenant un boîtier étanche (20).

7. Dispositif mobile selon la revendication 1, dans lequel chaque rotor (2, 3) de la paire est actionné indépendamment par une centrale électrique (5).
